# EUROPEAN PATENT APPLICATION

(11) **EP 2 328 370 A1**
(43) Date of publication of application: **01.06.2011**
(21) Application number: 10190842.4
(22) Date of filing: 11.11.2010
(51) Int. Cl.: H04W 24/06

(54) **Method and apparatus for measuring the interference in a wireless communication system**

(30) Priority: 30.11.2009 CN 200910246233
(71) Applicant: SIEMENS AKTIENGESELLSCHAFT, 80333 München (DE)
(72) Inventor: Lampe, Mattias, 38304, Wolfenbuettel (DE); Li, Zhi Jun, 100011, Beijing (CN); Müller, Jörg, 76351, Linkenheim (DE); Tian, Ji Feng, 100102, Beijing (CN)

(57) **Abstract**

The present invention provides a method for measuring the interference in a wireless communication system, which comprises the steps of: (1) one network device in said wireless communication system stopping sending the payload data; (2) said network device generating at least one testing packet, sending said testing packet to other network devices in said wireless communication system, and recording the averaged channel access delay of said testing packet; (3) determining the interference in said wireless communication system according to said averaged channel access delay. The method proposes to quantify the interference by using the averaged channel access delay as a mark, thereby evaluating the effect of the interference on the wireless communication system without modifying the hardware of the communication device.

## Description

### Technical Field

The present invention relates to an interference measuring method and apparatus, and more particularly to a method and apparatus for measuring the interference in a wireless communication system.

### Background Art

There is interference from various sources in a digital wireless communication system, and the wireless communication system accessed by way of Carrier Sense Multi-Access/Collision Avoidance (CSMA/CA) is a common communication system, which includes the communication systems of, for example, wireless LAN IEEE802.11, WLAN, and IEEE802.15.4 standard.

In order to determine the most appropriate communication parameters (e.g., wireless channel and channel bandwidth) in the communication system, or in order to estimate the throughput and/or averaged packet delay of the communication systems in a given environment, some network nodes (or even all network nodes) in the network are required to have the capability of measuring the interference in a given channel.

To measure the interference, there are various problems depending on the type of the interference sources. For example, some interference sources use the same communication protocol for communication as a wireless communication system does. In this case, the communication system can easily identify the packets sent from the interference source by certain factors, for example, the system source address, to identify the interference source and measure the power strength of these interference packets to obtain the strength of the interference source. Other interference sources may use a different communication protocol for communication than a wireless communication system does. In this case, the communication system is unable to identify the packets sent from the interference source, leading to inability to obtain the strength of the interference source.

In still another example, viewed from the access mode, some interference sources may compete to access the channel in a fair manner, and other interference sources can more easily access the channel and send signals.

In yet another example, an interference source may adapt its service traffic to the changing channel conditions. For instance, when a congest occurs in the communication system, the interference source may reduce the transmission rate or reduce the size of its data packets.

The abovementioned methods of obtaining the interferences and the power thereof are all of passive observation, and the passive observation method cannot clearly distinguish the differences between different interference sources. Furthermore, the effects of such factors as number of the interference sources, power level of the interference and channel seizure time of these interference sources on the communication system cannot be concluded reliably.

### Description of the Invention

The objective of the present invention is to provide an interference measuring method and apparatus to obtain the effects of the interference on a wireless communication system, without modifying the hardware of the communication system.

In order to achieve this objective, the present invention provides a method for measuring the interference in a wireless communication system, comprising:
(1) one network device in said wireless communication system stops sending the payload data;
(2) said network device generates at least one testing packet, sends said testing packet(s) to other network devices in said wireless communication system, and records the averaged channel access delay of said testing packet(s);
(3) said interference in the wireless communication system is determined according to said averaged channel access delay.

Preferably, said step (2) includes said network device generating at least one testing packet by running a software program.

Preferably, said step (2) includes recording the timestamps of sending said first testing packet and last testing packet, respectively, at the application layer, and then calculating the average of said timestamps to obtain said averaged channel access delay of the testing packet(s).

Preferably, said step (2) includes obtaining the channel access delay of each testing packet by recording the timestamp generated when it is sent by the software to the hardware and the timestamp generated after said hardware sending out the testing packet, and obtaining the averaged value of channel access delay of said at least one testing packet.

Preferably, said step (2) includes said network device sending said testing packets to all network devices in said wireless communication system by means of broadcasting.

Preferably, said step (2) includes said network device sending said testing packets to other network devices in said wireless communication system that are associated with said network device.

Preferably, said step (2) includes said network device sending the testing packets to a virtual network device in said wireless communication system.

Preferably, said averaged channel access delay is the averaged value of the channel access delay(s) of said at least one testing packet, or the variance of the channel access delay(s) of said at least one testing packet.

Accordingly, the present invention further provides an apparatus for measuring the interference in a wireless communication system, wherein said apparatus comprises at least one network device, wherein said network device comprises a testing packet generation module which generates at least one testing packet, sends said testing packet(s) to other network devices in the wireless communication system after said network device stops sending the payload data, and records the averaged channel access delay of said testing packet (s) .

Preferably, said network device includes a time recording module for recording the timestamps of sending said first testing packet and last testing packet, respectively, at the application layer, and then calculating the average of said timestamps to obtain the averaged channel access delay of said testing packets.

Preferably, said network device includes a time recording module used for obtaining the channel access delay of each testing packet by recording the timestamp generated when it is sent by the software to the hardware and the timestamp generated after said hardware sends out the testing packet, and for obtaining the averaged channel access delay of said at least one testing packet.

The method for measuring the interference in a wireless communication system provided by the present invention has the following advantages:
Firstly, the method proposes to quantify the interference by using the averaged channel access delay as a mark, and then evaluate the effect of the interference on the wireless communication system, without modifying the hardware of the communication device.

Secondly, the present invention is an active measuring method which can overcome the shortcoming of the passive measurement, and the channel that seems to be fully occupied in the passive measurement can still be used in the method according to the present invention.

Finally, the method of the present invention is suitable for in-line survey so that the number and nature of current interferences can be evaluated in a given environment.

### Description of Drawings

The embodiments of the invention are further described below with reference to the accompanying drawings, wherein:
Figure 1 is the flow chart of the method for measuring the interference in a wireless communication system according to the invention;
Figure 2 shows on WLAN equipment, the result of sending by broadcasting a certain number of testing packets and measuring the sending time of said testing packets.

### Exemplary Embodiments

Next, the WLAN system accessed by CSMA/CA is used as an example to describe the method for measuring the interference in a wireless communication according to the present invention. The core concept of the invention is to utilize the parameter, i.e. channel access delay, to indirectly reflect the size and distribution of the interferences, especially the effects of the access mechanism on the wireless communication system.

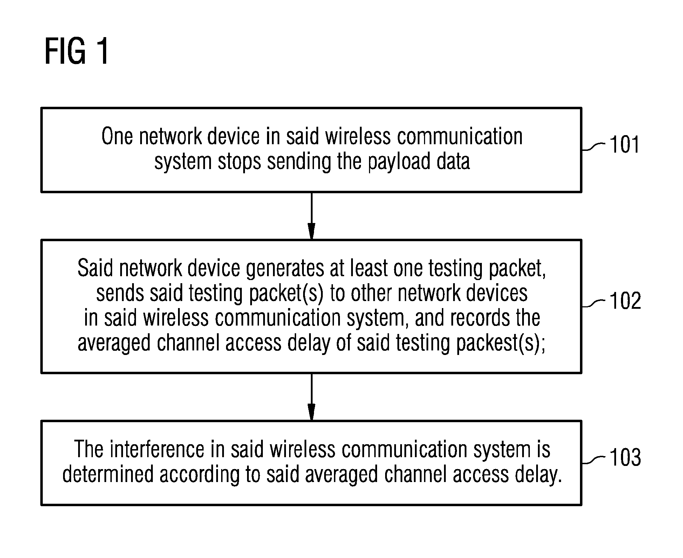

In the WLAN system shown in Figure 1, the interference measuring method comprises the steps of:
Step 101: (1) one network device in said wireless communication system stops sending the payload data. Or,
there are some features in the payload data so that the payload data can be used as the testing packets for interference measuring, in which case the payload data can be used as the testing packets.

Step 102: (2) said network device generates at least one testing packet, sends said testing packet(s) to other network devices in said wireless communication system, and records the averaged channel access delay of said testing packet(s).

Normally, a software program runs on the operating system of the WLAN network device and the software program can generate a series of testing packets. When the actual channel access delay ends, the measurement can be made in the following two ways:
In the first way, the time is recorded for the testing packets by the software at the application layer.
Particularly, the testing packets generated by the software part of the WLAN network device (access point, AP) are sent to the drive of the network device through the network protocol stack in the operating system, and are then sent to the hardware of the network device by the drive, and are further sent by the hardware through radio frequency. In this way, during sending of said testing packets, the timestamp of sending the first testing packet is recorded in the software at the application layer, and the timestamp of sending the last testing packet is recorded in the software at the application layer. The subtracting result of these two timestamps is divided by the number of the testing packets to obtain the averaged channel access delay of a series of testing packets.

In the second way, during sending of said testing packets, firstly the timestamp generated when a testing packet is sent by the drive to the hardware is recorded for each testing packet, and then the timestamp generated after said hardware sends the testing packet out is recorded, and the channel access delay of this testing packet is obtained from these two timestamps. After a series of testing packets are sent, the channel access delays of these testing packets are averaged to obtain the averaged channel access delay of this series of testing packets.

The WLAN network device sends said testing packets to other network devices, and these other devices do not need to verify the testing packets upon receiving said testing packets. Particularly, the WLAN network can send the generated testing packets to other network devices by one of the following ways.

In the first way, the WLAN network device sends said testing packets to all network devices in said wireless communication system by means of broadcasting. All network devices in the wireless communication system can detect the testing packets but these network devices do not need to verify the testing packets upon receiving the testing packets. Therefore this way can be easily implemented and does not require any modification to the drive or hardware at the sending end. However, as all network devices will process the received testing packets, these network devices need to use certain CPU time and energy for the processing, thus causing certain resource waste.

In the second way, the WLAN device sends said testing packets to other network devices in said wireless communication system which are associated with said network device. The other associated devices herein mean the network devices having specific destination addresses, and the WLAN network device sends the testing packets only to such network devices. The associated network devices also do not need to verify the testing packets upon receiving the testing packets. As the testing packets are sent only to the specific network devices, the resource waste caused by the first way is avoided. However this way can be used only when there is a network device associated with the WLAN device.

In the third way, the WLAN network device sends said testing packets to a virtual network device in said wireless communication system. This way can avoid the resource waste without having a network device associated with the WLAN network devices. However, modification to the drive is needed in the software in order to use this way, in other words, said testing packets are sent only if a target address of a target client is forged.

Said averaged channel access delay is the averaged value of the channel access delays of a series of testing packets. Alternatively, another way can be adopted as well, for example, using the maximum value, minimum value or variance of a series of testing packets as the parameter of the channel access delay.

Step 103: the interference in said wireless communication system is determined according to said averaged channel access delay. If said averaged channel delay is greater than a threshold, it is determined that the interference in the wireless communication system is larger at that time; if said averaged channel access delay is smaller than a threshold, it is determined that the interference in the wireless communication system is smaller. Said threshold can be determined by the averaged value of the interference in the wireless communication system which can be obtained by a number of experiments.

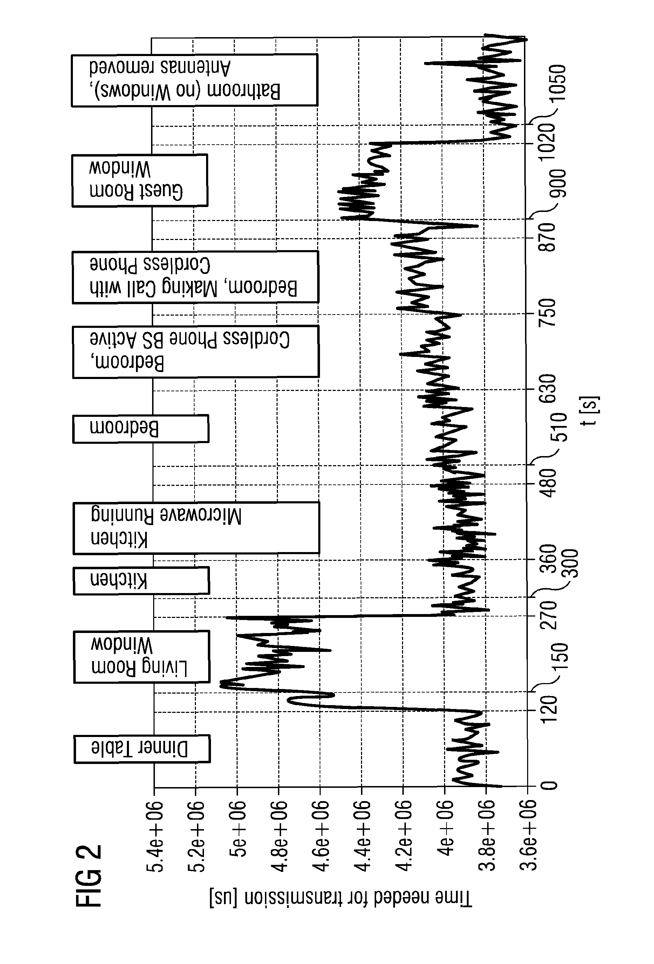

To verify the effect of the method of the invention, Figure 2 verifies the method of the invention. Figure 2 shows the result of sending a certain number of testing packets by broadcasting and measuring the sending time of said testing packets. It can be seen from Figure 2 that different rooms have different averaged channel access delay due to different strengths of the interference. Different types of interference source can also cause the testing packets to produce different averaged channel access delays. For example, in the location near the window, the WLAN interferences from other networks are the main interferences, and these interferences access the channel in the way of fair competition; however, the wireless phone accesses the channel in the way of frequency hopping instead of fair competition, thereby avoiding the possibility of being blocked at a single frequency. Though the effect of the wireless phone on the channel access delay is also significant, it is smaller than the effect of other WLAN interference sources.

In summary, the invention uses the averaged channel access delay as a mark to quantify the interferences, thereby evaluating the effect of the interferences on the wireless communication system.

The above only describes the preferred embodiments of the invention and it should be noted that those of ordinary skill in the art can make certain improvements and refinements without departing from the principle of the invention and such improvements and refinements should also fall into the protection scope of the invention.

## Claims

1. A method for measuring the interference in a wireless communication system, **characterized in that** the method comprises the steps of:
(1) one network device in said wireless communication system stopping sending the payload data;
(2) said network device generating at least one testing packet, sending said testing packet to other network devices in said wireless communication system, and recording the averaged channel access delay of said testing packet;
(3) determining the interference in said wireless communication system as claimed in said averaged channel access delay.

2. The method for measuring the interference in a wireless communication system as claimed in claim 1, **characterized in that** said step (2) includes said network device generating at least one testing packet by running a software program.

3. The method for measuring the interference in a wireless communication system as claimed in claim 1 or claim 2, **characterized in that** said step (2) includes recording the timestamps of sending said first testing packet and last testing packet, respectively, at the application layer, and then calculating the average of said timestamps to obtain the averaged channel access delay of said testing packets.

4. The method for measuring the interference in a wireless communication system as claimed in claim 1 or claim 2, **characterized in that** said step (2) includes obtaining the channel access delay of each testing packet by recording the timestamp generated when it is sent by the software to the hardware and the timestamp generated after said hardware sends out the testing packet, and obtaining the averaged value of the channel access delay(s) of said at least one testing packet.

5. The method for measuring the interference in a wireless communication system as claimed in claim 1 or claim 2, **characterized in that** said step (2) includes said network device sending said testing packets to all network devices in said wireless communication system by means of broadcasting.

6. The method for measuring the interference in a wireless communication system as claimed in claim 1 or claim 2, **characterized in that** said step (2) includes said network device sending said testing packets to other network devices in said wireless communication system that are associated with said network device.

7. The method for measuring the interference in a wireless communication system as claimed in claim 1 or claim 2, **characterized in that** said step (2) includes said network device sending said testing packets to a virtual network device in said wireless communication system.

8. The method for measuring the interference in a wireless communication system as claimed in any one of claims 1 through 7, **characterized in that** said averaged channel access delay is the averaged value of the channel access delay(s) of said at least one testing packet, or the variance of the channel access delay(s) of said at least one testing packet.

9. An apparatus for measuring the interference in a wireless communication system, wherein said apparatus comprises at least one network, **characterized in that**:
said network device comprises a testing packet generation module which generates at least one testing packet, sends said testing packet(s) to other network devices in the wireless communication system after said network device stops sending the payload data, and records the averaged channel access delay of said testing packet(s).

10. The apparatus for measuring the interference in a wireless communication system as claimed in claim 9, **characterized in that** said network device includes a time recording module for recording the timestamps of sending said first testing packet and last testing packet, respectively, at the application layer, and then calculating the average of said timestamps to obtain the averaged channel access delay of said testing packets.

11. The apparatus for measuring the interference in a wireless communication system as claimed in claim 9, **characterized in that** said network device includes a time recording module for obtaining the channel access delay of each testing packet by recording the timestamp generated when it is sent by the software to the hardware and the timestamp generated after said hardware sends out the testing packet, and for obtaining the averaged value of the channel access delay(s) of said at least one testing packet.
